# EUROPÄISCHE PATENTSCHRIFT

(11) **EP 2 509 917 B1**
(45) Veröffentlichungstag und Bekanntmachung des Hinweises auf die Patenterteilung: **22.07.2020**
(21) Anmeldenummer: 10787132.9
(22) Anmeldetag: 07.12.2010
(51) Int. Cl.: C08K 3/04, C08K 7/06, C08K 7/24, C01B 32/15, C01B 32/18, C01B 32/194, C01B 32/182, C01B 32/174, B82Y 40/00, B82Y 30/00, C01B 32/158

(54) **KOHLENSTOFFPARTIKELGRANULAT, DISPERSION AUS KOHLENSTOFFPARTIKELGRANULAT SOWIE VERFAHREN ZU DEREN HERSTELLUNG**
CARBON PARTICLE GRANULATE, DISPERSION OF CARBON PARTICLE GRANULATE, AND METHOD FOR THE PRODUCTION THEREOF
GRANULAT DE PARTICULES DE CARBONE, DISPERSION À BASE DE GRANULAT DE PARTICULES DE CARBONE ET PROCÉDÉS DE FABRICATION DU GRANULAT ET DE LA DISPERSION

(30) Priorität: 10.12.2009 DE 102009057771
(43) Veröffentlichungstag der Anmeldung: 17.10.2012
(73) Patentinhaber: Future Carbon GmbH, 95448 Bayreuth (DE)
(72) Erfinder: HELBIG, Jens, 90403 Nürnberg (DE); HERRMANN, Angelika, 95444 Bayreuth (DE)
(74) Vertreter: Müller, Christian Stefan Gerd
(86) Internationale Anmeldenummer: PCT/EP2010/069093
(87) Internationale Veröffentlichungsnummer: WO 2011/070026

(56) Entgegenhaltungen:
- WO-A1-00/05302
- US-A- 3 325 442
- DATABASE WPI Week 200720 Thomson Scientific, London, GB; AN 2007-196091 XP002651884, & JP 2007 035472 A (MATSUSHITA DENKI SANGYO KK) 8. Februar 2007 (2007-02-08)
- PIASTA D. ET AL.: "Endowing Carbon Black Pigment Particles with Primary Amino Groups", LANGMUIR, Bd. 25, Nr. 16, 9. Juli 2009 (2009-07-09), Seiten 9071-9077, XP002651885, DOI: 10.1021/la900407n
- KANG Y AND TATON T A ED - BARNES JONATHAN C ET AL: "Micelle-Encapsulated Carbon Nanotubes: A Route to Nanotube Composites", JOURNAL OF THE AMERICAN CHEMICAL SOCIETY, AMERICAN CHEMICAL SOCIETY, US, vol. 125, no. 19, 19 April 2003 (2003-04-19), pages 5650-5651, XP002988094, ISSN: 0002-7863, DOI: 10.1021/JA034082D

## Beschreibung

Die vorliegende Erfindung betrifft zunächst ein Kohlenstoffpartikelgranulat. Weiterhin betrifft die vorliegende Erfindung auch ein Verfahren zur Herstellung eines solchen Kohlenstoffpartikelgranulats. Zudem betrifft die vorliegende Erfindung eine Dispersion, aufweisend Kohlenstoffpartikelgranulat und ein Verfahren zur Herstellung einer Dispersion.

Kohlenstoffpartikel, beispielsweise Kohlenstoffnanopartikel, zum Beispiel Kohlenstoffnanoröhren (Carbon Nanotubes, CNT) haben besondere elektrische, thermische und mechanische Eigenschaften. So haben CNT eine sehr hohe elektrische Leitfähigkeit, die bis in den Bereich einer metallischen Leitfähigkeit gehen kann. Auch die thermische Leitfähigkeit der CNT kann theoretisch bis zu 6000 W/m K erreichen. Die mechanischen Eigenschaften der CNT sind extrem. So werden beispielsweise Zugfestigkeiten und E-Module erreicht, die dem 1000-fachen der von Stahl erreichten Werte entsprechen können. Deswegen sind Kohlenstoffnanopartikel als Zusätze in verschiedenen Matrixmaterialien zur Verbesserung der elektrischen Leitfähigkeit, der thermischen Leitfähigkeit, der mechanischen Eigenschaften und vielem mehr von besonderem Interesse in der chemischen Industrie, im Maschinenbau, im Automobilbau, der Luft- und Raumfahrt und auch der Medizintechnik und anderen Industriezweigen.
Das Dokument JP2007035472 beschreibt ein Kathodenmaterial für Lithiumbatterien, welches CNF, ein Bindemittel und Graphit enthält. Beispielsweise werden CNF und ein Stryol-Butadien-Kopolymer (als Bindemittel) im Gewichtsverhältnis 100:1 gemischt und Partikel mit einer Größe (d50) von 80 µm mittels Sprühtrocknungsverfahren erzeugt, also Partikel im Mikrometerbereich. Zu diesen Partikeln wird im nächsten Schritt Natrium-Carboxymethylcellulose gegeben.

Die Studie von Piasta D. et al. (Langumir, Bd. 25, Nr. 16, 9 Juli 2009, Seiten 9071-9077) beschreibt Polymere (z.B. Vinylamid-Vinylformamid Kopolymer) aus Ruß (carbon black).

Das Dokument US 3, 325,442 beschreibt Partikel basierend auf Polyethylene, welche Ruß (carbon black) als Füllstoff enthalten.
Im Dokument WO 00/05302 werden Kompositpartikel als spaltenfüllendes Medium oder Filtermedium in der Gas- und/oder Ölproduktion offenbart. Hierzu werden feinverteilte mineralische Füllstoffe (optional in Verbindung mit Fasen) in eine Polymermatrix eingebracht. Die Fasern können gemahlene Karbonfasen sein. Die Kompositpartikel haben eine Größe zwischen 0,425 und 0,85 mm.

Das Einbringen der CNT in polymere Materialien erlaubt so zum Beispiel eine Erhöhung der elektrischen Leitfähigkeit um mehrere Größenordnungen bei sehr geringen Konzentrationen an zugegebenen Partikeln. Um den spezifischen elektrischen Widerstand von Polyamid auf 10² Ωcm zu verbessern, werden ca. 10 Gewichtsprozent (wt.-%) Ruß benötigt. Mit CNT ist dies bereits mit einer Konzentration von 1 wt.-% realisierbar. Diese geringen Mengen an Kohlenstoffmaterial führt dazu, dass die Verarbeitungseigenschaften des Matrixmaterials im Vergleich zu der Zugabe von deutlich höheren Mengen an Ruß kaum beeinflusst werden und die mechanischen Eigenschaften nicht verschlechtert, sondern eventuell sogar verbessert werden.

Die Kohlenstoffnanopartikel müssen dazu in die entsprechende Matrix eingebracht werden. Dies kann über die unterschiedlichsten Mischverfahren durchgeführt werden, zum Beispiel Melt-Mixing, Compounding, mittels Rührverfahren oder Düsenverfahren, Mischen von CNT-Dispersionen mit Pulvern und nachträglichem Trocknen und dergleichen. Für alle diese Verfahren ist es allerdings notwendig, die CNT vor ihrer Anwendung oder während des Einmischens in Dispersion zu bringen.

Das Dispergieren von CNT ist allerdings deutlich schwieriger zu bewerkstelligen als bei anderen Pulvern, sogar noch schwieriger als bei den meisten anderen Nanopartikeln. Durch die besondere Form der Kohlenstoffnanopartikel, wie beispielsweise bei CNT, derentwegen die CNT ja unter anderem ihre besonderen Eigenschaften haben, ergeben sich besondere Schwierigkeiten bei der Dispergierung der CNT.

Die CNT haben eine Morphologie, die sich durch lange Röhren mit einem mittleren Durchmesser von wenigen Nanometern (nm) bis zu 300 nm ausdrückt. Die Länge der CNT kann dabei von wenigen Mikrometern (µm) bis zu 100 µm und mehr betragen. Dabei bestehen die CNT aus mehreren konzentrisch ineinander gesteckten Kohlenstoffröhren, die aus einer Graphenschicht bestehen. Neben diesen sogenannten Multiwallnanotubes (MW-CNT) gibt es auch noch die sogenannten Singlewallnanotubes (SW-CNT) die nur aus einer einzigen Graphenröhre bestehen. Herstellungsbedingt liegen die CNT typischerweise stark verknäult vor. Diese Knäuel sind mittels herkömmlicher Mischverfahren kaum aufzulösen, da die vorherrschenden Kräfte innerhalb der CNT-Agglomerate nur mit sehr hohem Energieaufwand überwunden werden können. Die vorherrschenden Haftmechanismen sind einerseits van der Waals-Kräfte, aber auch mechanische Verschleifungen.

Der vorliegenden Erfindung liegt deshalb die Aufgabe zugrunde, ein Kohlenstoffpartikelgranulat, insbesondere ein Kohlenstoffpartikelgranulat und/oder ein Kohlenstoffmikropartikelgranulat bereitzustellen, dass eine leicht dosierbare und dispergierbare Form von Kohlenstoffpartikeln, insbesondere von CNT, bereitgestellt werden kann.

Diese Aufgabe wird erfindungsgemäß gelöst durch das Kohlenstoffpartikelgranulat mit den Merkmalen gemäß des unabhängigen Patentspruchs 1 sowie das Verfahren zur Herstellung eines Kohlenstoffpartikelgranulats mit den Merkmalen gemäß des unabhängigen Patentanspruchs 5. Des Weiteren wird die Aufgabe gelöst durch die Dispersion gemäß des unabhängigen Patentanspruchs 6, sowie dem Verfahren zur Herstellung der Dispersion gemäß des unabhängigen Patentanspruchs 8.

Weitere Merkmale und Details der Erfindung ergeben sich aus den Unteransprüchen, der Beschreibung sowie den Beispielen. Dabei gelten Merkmale und Details, die im Zusammenhang mit dem Kohlenstoffpartikelgranulat beschrieben sind, selbstverständlich auch im Zusammenhang mit dem erfindungsgemäßen Verfahren zur Herstellung des Kohlenstoffpartikelgranulats, der Dispersion und dem Verfahren zur Herstellung der Dispersion und umgekehrt. Merkmale und Details, die im Zusammenhang mit dem erfindungsgemäßen Verfahren zur Herstellung des Kohlenstoffpartikelgranulats beschrieben sind, gelten selbstverständlich auch im Zusammenhang mit der Dispersion und dem Verfahren zur Herstellung der Dispersion und umgekehrt. Ebenso gelten Merkmale und Details, die im Zusammenhang mit der Dispersion beschrieben sind, selbstverständlich auch im Zusammenhang mit dem Verfahren zur Herstellung der Dispersion und umgekehrt.

Gemäß des ersten Aspekts der Erfindung wird ein Kohlenstoffpartikelgranulat, insbesondere ein Kohlenstoffnanopartikelgranulat und/oder ein Kohlenstoffmikropartikelgranulat, bereitgestellt, wobei das Kohlenstoffpartikelgranulat eine Anzahl von Granulatpartikeln aufweist. Dabei ist ein Granulatpartikel jeweils aus einem Primärpartikel auf Kohlenstoffbasis und wenigstens aus einem Tensid gebildet.

Bei einem Kohlenstoffpartikelgranulat handelt es sich vorzugsweise um Partikelgranulat aus Kohlenstoff und/oder auf Kohlenstoffbasis basierend und/oder Kohlenstoff beinhaltend.

Als Kohlenstoff wird dabei im Lichte der Erfindung das chemische Element Kohlenstoff gesehen, welches allgemein üblich mit dem Buchstaben "C" abgekürzt wird.

"Auf Kohlenstoffbasis basierend" wird im Lichte der Erfindung derart verstanden, dass das Partikelgranulat zu einem großen Anteil aus Kohlenstoff besteht.

Als Granulat wird im Allgemeinen ein körniger oder pulverförmiger, leicht schüttbarer Feststoff verstanden. Insbesondere besteht ein Granulat aus vielen kleinen, festen Partikeln, wie Körnern, Kugeln oder dergleichen. Die vorliegende Erfindung ist nicht auf bestimmte Arten von Granulat oder Partikelformen oder Partikelgrößen beschränkt. Besonders vorzuheben bei Granulaten ist die Tatsache, dass Granulate, insbesondere Partikelgranulate schüttbar beziehungsweise rieselfähig sein können beziehungsweis sind.

Im Rahmen der vorliegenden Erfindung wird unter Kohlenstoffnanopartikelgranulat ein Feststoff verstanden, der vorzugsweise die oben genannten Eigenschaften beziehungsweise Merkmale aufweist. Kohlenstoffnanopartikelgranulat beinhaltet vorzugsweise Kohlenstoff-Primärpartikel, die eine Größe im Nanometerbereich aufweisen.

Als Kohlenstoffmikropartikelgranulat wird dagegen vorzugsweise ein Feststoff verstanden, der vorzugsweise die oben genannten Eigenschaften beziehungsweise Merkmale aufweist. Kohlenstoffmikropartikelgranulat beinhaltet dabei vorzugsweise Kohlenstoff-Primärpartikel, die eine Größe im Mikrometerbereich und/oder darüber aufweisen.

Die Angaben "nano" und "mikro" in Kohlenstoffnano- bzw. Kohlenstoffmikropartikelgranulat bezieht sich insbesondere auf die Kohlenstoff-Primärpartikel, die vorzugsweise jeweils Größen in dem entsprechenden Bereich aufweisen. Die Granulatpartikel unterliegen jedoch keiner grundsätzlichen Beschränkung ihrer Größe, außer dass die Granulatpartikel vorzugsweise größer sind als die jeweiligen Primärpartikel. Vorzugsweise wird eine Größe der Granulatpartikel im Mikrometer-Bereich angestrebt, beispielsweise eine mittlere Teilchengröße bevorzugt über 20 µm, besonders bevorzugt über 50µm, ganz besonders bevorzugt über 100µm.

Bei einem Partikelgranulat handelt es sich vorzugsweise um ein Granulat, welches aus Granulatpartikeln besteht beziehungsweise aus Partikeln zusammengesetzt ist.

Partikel sind dabei kleine Festkörper, die beispielsweise die festen Bestandteile von Aerosolen, Suspensionen, Pulvern oder Granulaten darstellen können. Die vorliegende Erfindung ist nicht auf bestimmte Partikel oder Partikelgrößen beschränkt. Als Synonym für Partikel wird allgemein üblich auch der Begriff Teilchen verwendet. Ein Teilchen oder Partikel ist dabei insbesondere ein Körper, der klein gegenüber dem Maßstab des betrachteten Systems ist. Die innere Struktur des einzelnen Teilchens oder Partikels spielt dabei keine Rolle, sondern lediglich sein Verhalten als Ganzes gegenüber anderen Teilchen oder Partikeln oder äußeren Einflüssen.

Ein Granulatpartikel ist dabei vorzugsweise jeweils aus einem Primärpartikel und wenigstens einem Additiv gebildet. Die Granulatpartikel setzten sich somit aus Primärpartikeln und wenigstens einem Additiv zusammen.

Bei dem Primärpartikel handelt sich um einen Partikel auf Kohlenstoffbasis, welches vereinzelbare Carbon Nanotubes (CNT) aufweist.

Die Größe der Primärpartikel ist vorzugsweise im Vergleich zu den Granulatpartikeln, die auch als Sekundärpartikel bezeichnet werden können, geringer.

Das Kohlenstoffpartikelgranulat weist Primärpartikel auf Kohlenstoffbasis auf, wobei die Primärpartikel auf Kohlenstoffbasis vereinzelbare Carbon Nanotubes (CNT) aufweisen.

Im Sinne der vorliegenden Erfindung wird der Begriff "überwiegend" derart verstanden, dass das Kohlenstoffpartikelgranulat zu mehr als 30 wt.-% aus graphitischem Material oder aus Material, das aus Graphenebenen aufgebaut ist, besteht. In einer bevorzugten Ausführungsform besteht das Kohlenstoffpartikelgranulat zu mindestens 50 wt.-%, besonders bevorzugt zu mindestens 70 wt.-% aus graphitischem Material oder aus Material, das aus Graphenebenen aufgebaut ist. Andere Zusammensetzungen, vorzugsweise in wt.-%, sind jedoch nicht ausgeschlossen.

Als "graphitisches Material oder Material, das aus Graphenebenen aufgebaut ist, oder auch Graphitmaterial" wird vorzugsweise Material bezeichnet, welches aus Graphenebenen besteht, wobei die vorliegende Erfindung nicht auf bestimmte Ausführungsformen des Graphitmaterials beschränkt ist. Als Beispiele für graphitisches Material oder für Material, das aus Graphenebenen aufgebaut ist, können beispielsweise Graphit, Carbon Nanotubes, Carbon Nanofibres oder Graphen genannt werden, wobei die vorliegende Erfindung nicht auf diese Materialien beschränkt ist.

Bei dem graphitischem Material oder dem Material, das aus Graphenebenen aufgebaut ist oder Graphitmaterial kann es sich zudem um Material bestehend aus Kohlenstoff der vorstehend genannten Art handeln. Es ist darüber hinaus auch möglich, dass das graphitische Material oder das Material, das aus Graphenebenen aufgebaut ist oder das Graphitmaterial durch dazu im Vergleich große Partikel beziehungsweise durch große Bestandteile charakterisiert ist.

Als CNT werden vorzugsweise Carbon Nanotubes der vorgenannten Art verstanden. Demgegenüber sind CNF vorzugsweise dadurch charakterisiert, dass diese keine Röhrenform aufweisen, sondern als eine Faser ausgebildet sind.

Graphen ist vorzugsweise die Bezeichnung für eine Modifikation des Kohlenstoffs mit zweidimensionaler Struktur, in der jedes Kohlenstoffatom von drei weiteren umgeben ist, so dass sich ein bienenwabenförmiges Muster ausbildet. Eine Graphenschicht, die auch als Graphenlage bezeichnet werden kann, ist vorzugsweise weniger als 1 nm dick. Der Abstand zwischen zwei benachbarten Graphenschichten beträgt in graphitischen Materialien etwa 0,335 nm. Somit weisen die erfindungsgemäßen Graphen-Primärpartikel vorzugsweise eine Dicke von bis zu etwa 20 nm auf. Dies kann beispielsweis durch Aufbau aus bis zu 50 Graphenschichten erfolgen. Die vorliegende Erfindung ist jedoch nicht auf diese Dicke beschränkt. So kann zudem vorgesehen sein, dass die Graphen-Primärpartikel eine Dicke von bis zu 50 nm aufweisen.

Somit weisen die Graphen-Primärpartikel eine maximale Dicke von 50 nm, bevorzugt von 20 nm auf. Die vorliegende Erfindung ist jedoch nicht auf diese Dicken beschränkt. So kann zudem möglich sein, dass die Dicke der Graphenschichten unter 20 nm liegt.

Das Aspektverhältnis wird vorzugsweise verstanden als das Verhältnis von Länge zu Durchmesser, Länge zu Breite oder Länge zu Dicke. Als Länge wird dabei immer die größte Ausdehnung eines Partikels in eine der Raumrichtungen gewählt. Somit ist das Aspektverhältnis immer größer oder gleich eins. Somit entspräche ein Aspektverhältnis von eins einer perfekten Kugel beziehungsweise Kugelform. Abweichungen von einer Kugel werden mit Aspektverhältnissen, die größer eins sind, beschrieben. Vorzugsweise wird als Faustregel angegeben, dass je größer das Aspektverhältnis ist, beispielsweise ab einem bestimmten Wert von 10 oder mehr, die Verarbeitung umso schwieriger ist.

Die Primärpartikel der erfindungsgemäß verwendeten Materialien weisen typischerweise ein sehr hohes Aspektverhältnis auf. Das Partikelgranulat, insbesondere ausgebildet aus Primärpartikeln und wenigstens einem Additiv, hingegen soll vorzugsweise ein niedriges Aspektverhältnis aufweisen.

Das Aspektverhältnis der erfindungsgemäß verwendeten Primärpartikel ist typischerweise sehr groß, weist also hohe Zahlenwerte auf. Häufig ist das Aspektverhältnis der Primärpartikel größer als 100, oft sogar größer 1000, wobei die vorliegende Erfindung nicht auf diese Aspektverhältnisse beschränkt ist.

Trotz der Verwendung der vereinzelbaren Carbon Nanotubes (CNT) erhält das Kohlenstoffpartikelgranulat besondere Eigenschaften beziehungsweise Fähigkeiten.

Vorzugsweise ist das Kohlenstoffpartikelgranulat trotz der vereinzelbaren Carbon Nanotubes (CNT) leicht dosierbar und/oder leicht dispergierbar und/oder leicht redispergierbar. Zudem kann das Kohlenstoffpartikelgranulat trotz der vereinzelbaren Carbon Nanotubes (CNT) leicht lösbar sein.

In der vorliegenden Erfindung wird der Begriff "leicht dosierbar" als eine nähere Beschreibung beziehungsweise Erläuterung einer Dosierung verstanden.

Als Dosierung kann dabei eine leichte Zuführung des Granulats ohne vergrößerten technischen Aufwand im Vergleich zu üblichen Verfahren verstanden werden. In der Kunststoffverarbeitung sind beispielsweise Dosierwaagen zur Dosierung des Granulats üblich.

Bei einer leichten Dosierung ist zudem das Ziel die Zuführung möglichst einfach zu gestalten. Dies soll auch im Sinne des Arbeitsschutzes erfolgen, da bei einer erfindungsgemäßen Dosierung das Granulat trocken zugeführt werden kann und/oder leicht absaugbar ist beziehungsweise abgesaugt werden kann. Zudem kann bei der erfindungsgemäßen Dosierung die Zuführung von unerwünschten Trägermittel vermieden werden.

"Leicht dosierbar" kann dabei auch im Zusammenhang mit der Rieselfähigkeit und der Staubfreiheit der Substanzen gesehen werden. Beispielsweise können im Gegensatz dazu die Primärpartikel stark staubend und/oder brückenbildend sein, was die genaue Dosierung und Zuführung zum Matrixmaterial erheblich erschwert, so dass eine leichte Dosierung erschwert wird.

Eine "leichte Dosierbarkeit" kann dabei auch durch die Reibungsbedingungen beschrieben werden. Sofern günstige Reibungsbedingungen vorliegen, so kann eine "leichte Dosierbarkeit" erzielt werden.

Die Reibungsbedingungen sind im Allgemeinen eine Funktion der spezifischen Oberfläche des Pulvers. In einem Pulver mit großer spezifischer Oberfläche, das heißt geringer mittlerer Teilchengröße und oder hohem Aspektverhältnis, wird die Reibung stärker und das Fließvermögen ungünstiger sein als für ein Pulver mit kleinerer Oberfläche. Wegen der mit abnehmender Teilchengröße zunehmenden Wirkung von Oberflächenkräften neigen feine Pulver außerdem zur Brückenbildung, sie blockieren damit den Teilchenfluss.

Aufgrund der Kombination von Primärpartikeln und wenigstens einem Additiv, welches im weiteren Verlauf der Beschreibung noch näher spezifiziert wird, können diese Brückenbildung verhindert und die Reibungsbedingungen verbessert werden, so dass die Dosierbarkeit des Kohlenstoffpartikelgranulats vereinfacht wird.

Eine Dosierung kann aber auch als Synonym einer Dosis verstanden werden. Dabei ist eine Dosis oder Dosierung eine zugemessene Menge eines Stoffes, die einem zweiten Beteiligten zugeführt wird. Bei diesem zweiten Beteiligten kann es sich um jede Art von Beteiligten handeln, so dass die vorliegende Erfindung nicht auf bestimmte Arten von Beteiligten beschränkt ist. Ein Beteiligter im Sinne der vorliegenden Erfindung kann beispielsweise ein Festkörper sein. Vorzugsweise ist ein Beteiligter ein Festkörper in Form eines Granulats beziehungsweise eines Partikelgranulats, wobei die Partikel eine Größe der oben bereits ausgeführten Form ausweisen können. Vorzugsweise können dabei Primärpartikel und/oder Sekundärpartikel verwendet werden. Ein Beteiligter, dem eine Dosis oder Dosierung eines bestimmten Stoffes zugeführt wird, kann vorzugsweise auch eine Flüssigkeit sein, wobei ebenfalls die Bestandteile der Flüssigkeit Merkmale der oben genannten Form aufweisen können.

Als "leicht dosierbar" kann im Sinne der vorliegenden Erfindung ebenfalls verstanden werden, dass die Menge an dem Stoff, welcher dem Beteiligten zugeführt werden soll, diesem "leicht" zugeführt werden kann. Als "leicht" kann dabei vorzugsweise verstanden werden, dass zur Zuführung keine zusätzlichen Hilfsmittel, beispielsweise in Form von Aktivierungswärme, Binder, Additiven oder dergleichen zugeführt werden müssen. Die vorliegende Erfindung ist nicht auf bestimmte Formen oder Arten oder Mengen von Hilfsmitteln oder dergleichen beschränkt. Ein "leichtes dosieren" ist ohne weiteren Aufwand möglich, indem vorzugsweise keine weiteren Maßnahmen oder Beschränkungen oder Einschränkungen zu berücksichtigt sind, sondern die Zugabe des Stoffes an den Beteiligten in problemloser Art und Weise erfolgen kann.

Als "leicht dispergierbar" im Sinne der vorliegenden Erfindung wird vorzugsweise verstanden, dass die Herstellung einer Dispersion oder das Verfahren zur Herstellung von Suspensionen, was auch als Dispergierung bezeichnet werden kann, auf einfache beziehungsweise leichte Art und Weise erfolgen kann.

Eine Dispersion ist dabei beispielsweise ein heterogenes Gemisch aus mindestens zwei Stoffen, die sich nicht oder kaum ineinander lösen oder miteinander verbinden. Bei einer Dispersion kann ein Stoff, der auch als dispergierte Phase, disperse Phase, innere Phase oder Nebenphase bezeichnet werden kann, möglichst fein in einem anderen Stoff, weicher auch als Dispersionsmittel, Dispersionsmedium, Dispergens, kontinuierliche Phase, äußere Phase oder Hauptphase bezeichnet werden kann, verteilt.

Eine Suspension ist vorzugsweise ein heterogenes Stoffgemisch aus einer Flüssigkeit und darin fein verteilten Feststoffen, die in der Flüssigkeit mit geeigneten Aggregaten, beispielsweise Rührer sowie meist mit Hilfe zusätzlicher Dispergiermittel aufgeschlämmt und in der Schwebe gehalten werden.

Als Dispergierung oder Dispergieren wird vorzugsweise ein Verfahrensschritt bei der Herstellung von Suspensionen verstanden. Beim Dispergieren werden zumeist Pigmente und Füllstoffe in ein bestehendes System eingearbeitet beziehungsweise eingebracht. Dabei wird eine Suspension, welche eine spezielle Art einer Dispersion darstellt, hergestellt, also eine feste Phase in einer flüssigen Phase verteilt. Neben der gleichmäßigen Verteilung im Trägermaterial kann die Dispergierung auch die Benetzung des zu dispergierenden Stoffes mit dem Trägermaterial, sowie die Zerkleinerung des zu dispergierenden Stoffes und die anschließende Stabilisierung umschreiben.

Als "leicht dispergierbar" kann im Sinne der vorliegenden Erfindung auch verstanden werden, dass eine, wie oben genannte Dispersion, ohne zusätzliche Hilfsmittel oder Berücksichtigung, wie bereits oben erwähnt, hergestellt wird oder werden kann.

Als "redispergierbar" im Sinne der vorliegenden Erfindung wird insbesondere verstanden, dass ein Stoff in einen dispersen Zustand gebracht wurde und danach auf eine Art agglomeriert wurde, die ein Auflösen der Agglomerate und ein Dispergieren der Partikel in den Zustand, den sie in der Dispersion vor dem Agglomerieren hatten, ermöglicht. Somit besteht einer der großen Vorteile des beschriebenen Verfahrens oder des Produkts darin, dass die Dispersion aus dem redispergierten Granulat (nahezu) die gleichen Eigenschaften wie die ursprüngliche Dispersion aufweisen kann beziehungsweise aufweist. Dies ist bei einem auf andere Art und Weise erzeugten Granulat nicht der Fall.

Eine vorteilhafte Eigenschaft des Kohlenstoffpartikelgranulats ist beispielsweise die gute Redispergierbarkeit.

Im Stand der Technik sind zur Dispergierung von CNTs spezielle Verfahren, wie beispielsweise Ultraschall vorgesehen.

Im Allgemeinen werden dabei Energien von größer 10000 kJ pro eingebrachtem kg CNT eingesetzt. Diese können jedoch auch bis zu 100000 kJ/kg CNT und mehr betragen. Zudem muss häufig eine besondere Scherbeanspruchung erzeugt werden. Der Aufwand zur Redispergierung des Kohlenstoffpartikelgranulats der vorliegenden Erfindung ist jedoch ungleich niedriger. Trotz dieses geringen Aufwands können Dispersionen hergestellt werden, die nahezu die gleichen Eigenschaften haben wie die Ausgangsdispersion. Dafür reicht im Allgemeinen einfaches Aufrühren.

Unter dem Begriff "lösbar" wird im Sinne der vorliegenden Erfindung eine Lösung im chemischen Sinne verstanden. Dabei ist eine Lösung vorzugsweise ein homogenes Gemisch, welches aus mindestens zwei chemischen Stoffen besteht. Eine solche Lösung kann dabei zum einen aus einem oder mehreren gelösten festen, flüssigen oder gasförmigen Stoffen, zum anderen aus dem in der Regel flüssigen und den größten Teil der Lösung ausmachenden flüssigen oder festen Lösungsmittel, das seinerseits wiederum eine Lösung sein kann, bestehen.

Inwieweit und in welcher Menge ein Stoff lösbar ist, hängt vorzugsweise von der Löslichkeit des Stoffes ab. Im Allgemeinen gibt die Löslichkeit eines Stoffes an, in welchem Umfang ein Stoff in einem Lösungsmittel gelöst werden kann. Sie bezeichnet die Eigenschaft des Stoffes, sich vorzugsweise unter homogener Verteilung im Lösungsmittel zu vermischen, das heißt zu lösen. Zumeist ist das Lösungsmittel eine Flüssigkeit. Ein Lösungsmittel kann aber auch eine feste Lösung darstellen.

Löslichkeit bezieht sich somit im Allgemeinen auf die Menge an Stoff die in einem anderen Stoff gelöst werden kann, wobei die Geschwindigkeit mit der die gelösten Bestandteile sich im Lösungsmittel oder Lösemittel auflösen, bestimmt, wie schnell sich ein Stoff in einem anderen Stoff löst oder lösbar ist, so das an der Grenzfläche keine gesättigte Lösung entstehen kann.

Im Allgemeinen wird die Löslichkeit eines Stoffes in schwerlöslich, mäßig löslich oder leicht löslich eingestuft. Dabei wird vorzugsweise die Löslichkeit über die Menge an maximal gelöstem Stoff verwendet. Im Allgemeinen werden Stoffe unter 0,1 mol/l gelöstem Stoff als schwerlöslich bezeichnet. Stoffe zwischen 0,1 und 1 mol/l werden als mäßig löslich und Löslichkeiten größer als 1 mol/l gelten als leicht löslich. Bei der in der vorliegenden Erfindung bezeichneten "leichten Löslichkeit" wird vorzugsweise eine Löslichkeit größer als 1 mol/l, gemäß der allgemein üblichen Definition verstanden.

Insbesondere handelt es sich bei dem Kohlenstoffpartikelgranulat um leichtlösliche und/oder redispergierbare CNT-Granulate. Dabei ist die Erfindung nicht auf bestimmte Arten von Kohlenstoffmaterialien beschränkt. Einige vorteilhafte, jedoch nicht ausschließliche Beispiele werden im Weiteren Verlauf näher beschrieben.

Durch das erfindungsgemäße Kohlenstoffpartikelgranulat ist es möglich, eine leicht dosierbare und dispergierbare Form von Kohlenstoffpartikeln, CNT, zu haben, die man in beliebiger Menge dem eigenen Material zusetzen kann. Dieses Material sollte vorzugsweise trocken vorliegen, aber aus verfahrenstechnischen und Arbeitsschutz Gründen vorzugsweise nach Möglichkeit nicht verstauben. Trotzdem sollen sich die Partikel in die eingebrachte Matrix gut einmischen lassen und mit herkömmlichen Mischverfahren, wie oben beschrieben, einmischen lassen. Dies alles kann mit dem erfindungsgemäßen Kohlenstoffpartikelgranulat erreicht werden.

Trockene Kohlenstoffpartikel, beispielsweise Kohlenstoffnanopartikel, so wie sie bei der Synthese entstehen, können nicht direkt mit zufriedenstellenden Ergebnissen in die Endprodukte eingemischt werden, da Sie die beschrieben Nachteile bei der Dispergierbarkeit haben. Dies gilt auch für zumindest teilweise als Granulat produzierte und häufig als "staubfrei" beschriebene Materialien. Das Herstellen von vordispergierten, trockenen Produkten ist bis heute nicht gelungen. Denn beim Trocknen von Kohlenstoffpartikeldispersionen führen die sehr hohen Kapillarkräfte dazu, dass sich die Kohlenstoffpartikel sehr eng aneinander anlagern und so sehr starke Wechselwirkungskräfte zwischen den Partikeln entstehen, die sogar stärker sein können als bei frisch synthetisierten Kohlenstoffpartikeln. Diese entstandenen Agglomerate lassen sich normalerweise mit keinem Misch- oder Dispergierverfahren ohne Zerstörung der CNT wieder auflösen und sind deswegen für eine Anwendung nicht geeignet.

In dieser Anmeldung ist insbesondere ein redispergierbares Kohlenstoffpartikelgranulat, beispielsweise ein Kohlenstoffnanopartikelgranulat, beschrieben, welches sich leicht zu einzelnen Kohlenstoffpartikeln auflösen lässt, wobei nach dem Auflösungsprozess keine oder nur sehr kleine Agglomerate zurückbleiben, die die späteren Eigenschaften in der Matrix nicht nachteilig beeinflussen.

Als Binder, der auch als Bindemittel bezeichnet werden kann, können Stoffe verstanden werden, durch die Feststoffe mit einem feinen Zerteilungsgrad (zum Beispiel Pulver) miteinander bzw. auf einer Unterlage verklebt werden. Bindemittel werden meist in flüssiger Form den zu bindenden Füllstoffen zugesetzt. Beide Stoffe werden intensiv vermischt, damit sie sich gleichmäßig verteilen und alle Partikel des Füllstoffs gleichmäßig mit dem Bindemittel benetzt werden. Durch die Art des Bindemittels können dem Füllstoff neue Verarbeitungseigenschaften und/oder Materialeigenschaften verliehen werden.

Als Dispergierhilfsmittel können Stoffe verstanden werden, die das Dispergieren von Substanzen wie in der oben genannten Art und Weise ermöglichen und/oder erleichtern.

Zur Stabilisierung des Kohlenstoffpartikelgranulat, beispielsweise des Kohlenstoffnanopartikelgranulats, ist dem Granulat vorteilhaft wenigstens ein Additiv beigesetzt, welches beispielsweise einerseits als Binder im Granulat wirkt, auf der anderen Seite auch als Dispergierhilfsmittel beim Wiederauflösen des Granulats dient. Die Menge des Binders oder des Dispergierhilfsmittels kann bei mehr als 500 wt.-% des eingesetzten Kohlenstoffmaterials sein, liegt aber bevorzugt in einem Bereich von 5-200 wt.-% des eingesetzten Kohlenstoffmaterials, besonders bevorzugt in einem Bereich von 5-100 wt.-% des eingesetzten Kohlenstoffmaterials.

Da die Additive im Sinne der vorliegenden Erfindung ebenfalls Kohlenstoff enthalten können, wird in der vorliegenden Erfindung vorzugsweise der Anteil des Kohlenstoffs in solchen Additiven in Bezug auf den Gesamtanteil des Kohlenstoffs der oben genannten Art nicht berücksichtigt.

Tenside sind im Allgemeinen Substanzen, die die Oberflächenspannung einer Flüssigkeit oder die Grenzflächenspannung zwischen zwei Phasen herabsetzen und die Bildung von Dispersionen, der oben genannten Art, ermöglichen oder unterstützen beziehungsweise als Lösungsvermittler wirken.

Ein Polymer ist im Allgemeinen eine chemische Verbindung aus Ketten- oder verzweigten Molekülen, beispielsweise Makromolekülen, die wiederum aus gleichen oder gleichartigen Einheiten, Monomeren, bestehen.

Polyelektrolyte sind im Allgemeinen wasserlösliche Verbindungen mit großer Kettenlänge, wie beispielsweise Polymere, die kationische - Polybasen - oder anionische - Polysäuren - dissoziierbare Gruppen tragen.

Die Tenside können beispielsweise Tenside mit unterschiedlicher lonogenität sein, kurz- und langkettige Polymere, Monomere oder Polyelektrolyte. Auch Mischungen der beschriebenen Additive sind möglich. Die Additive können, müssen aber nicht, bei der Herstellung des Kohlenstoffpartikelgranulats eine chemische Reaktion mit den Kohlenstoffpartikeln oder mit sich selbst oder mit anderen Additiven im Granulat durchführen.

Da die Additive im Sinne der vorliegenden Erfindung ebenfalls Kohlenstoff enthalten können, wird in der vorliegenden Erfindung vorzugsweise der Anteil des Kohlenstoffs in solchen Additiven in Bezug auf den Gesamtanteil des Kohlenstoffs der oben genannten Art nicht berücksichtigt.

In weiterer Ausgestaltung kann das Kohlenstoffpartikelgranulat vorzugsweise einen Kohlenstoffgehalt von größer gleich 30 wt.-%, bevorzugt von größer gleich 50 wt.-%, besonders bevorzugt von größer gleich 70 wt.-% aufweisen.

So kann das Kohlenstoffpartikelgranulat einen Kohlenstoffgehalt von größer gleich 30 wt.-% aufweisen. Bevorzugt weist das Kohlenstoffpartikelgranulat einen Kohlenstoffgehalt größer gleich 50 wt.-%, besonders bevorzugt von größer gleich 70 wt.-% auf. Es sind aber auch Kohlenstoffgehalte im Kohlenstoffpartikelgranulat von weniger als 30 wt.-% nicht ausgeschlossen.

Da die Additive im Sinne der vorliegenden Erfindung ebenfalls Kohlenstoff enthalten können, wird in der vorliegenden Erfindung vorzugsweise der Anteil des Kohlenstoffs in solchen Additiven in Bezug auf den Gesamtanteil des Kohlenstoffs der oben genannten Art nicht berücksichtigt.

In weiterer Ausgestaltung kann das Kohlenstoffpartikelgranulat einen Feuchtegehalt von unter 30% aufweisen. Bevorzugt weist das Kohlenstoffpartikelgranulat einen Feuchtegehalt von unter 10% Feuchte, besonders bevorzugt von unter 1% Feuchte auf.

Im Sinne der vorliegenden Erfindung wird der Feuchtegehalt als Feuchtegehalt beziehungsweise Wasser- und/oder Lösemittelgehalt verstanden, wobei der Feuchtegehalt vorzugsweise das Verhältnis der Masse der im Stoff enthaltenen Flüssigkeit zur Masse des flüssigkeitsfreien Stoffes beschreibt.

Der Begriff "Feuchte", welcher auch als "Feuchtigkeit" beschrieben wird, kennzeichnet vorzugsweise die Anwesenheit einer Flüssigkeit, beispielsweise Wasser und/oder Lösemittel in oder an einer Substanz.

Diese Flüssigkeit kann dabei jede Art von Flüssigkeit, wie beispielsweise Wasser und/oder Ethanol und/oder ein anderes Lösemittel sein.

Der Feuchtegehalt in der vorliegenden Erfindung bezieht sich vorzugsweise auf den Gehalt an Feuchte nach einem Trocknungsprozess. Dabei kann der Trocknungsprozess durch einen Sprühtrocknungsprozess ausgebildet sein.

In weiterer Ausgestaltung weist das Kohlenstoffpartikelgranulat eine mittlere Partikelgröße der Granulatpartikel von größer gleich 20 µm, bevorzugt von größer gleich 50 µm, besonders bevorzugt von größer gleich 100 µm auf.

Als Partikelgröße wird dabei im Sinne der vorliegenden Erfindung insbesondere die Größe der Sekundärpartikel verstanden, wobei die vorliegende Erfindung nicht auf bestimmte Partikelgrößen beschränkt ist.

Gemäß eines zweiten Aspekts der vorliegenden Erfindung wird ein Verfahren zur Herstellung eines Kohlenstoffpartikelgranulats beschrieben. Dabei handelt es sich insbesondere um ein Kohlenstoffpartikelgranulat nach der oben beschriebenen Art. Das Kohlenstoffpartikelgranulat ist dadurch gekennzeichnet, dass Primärpartikel auf Kohlenstoffbasis und wenigstens ein Additiv in einer Flüssigkeit oder in einem niederviskosen Medium zu einer Dispersion vereinzelt werden. Zudem wird die Dispersion in einem Aufbau- und/oder Trocknungsprozess in die Form eines Kohlenstoffpartikelgranulats gebracht.

Das Verfahren zur Herstellung eines Kohlenstoffgranulats, insbesondere eines wie vorstehend beschriebenen erfindungsgemäßen Kohlenstoffgranulats kann so ablaufen, dass ein Kohlenstoffmaterial in einer Flüssigkeit oder einem niederviskosen Medium vereinzelt wird und dass die Flüssigkeit oder das niederviskose Medium mit dem darin befindlichen Kohlenstoffmaterial in einem Trocknungsprozess in die Form eines Granulats gebracht wird.

Beispielsweise ist vorgesehen, dass ein Kohlenstoffmaterial in einer Flüssigkeit oder einem niederviskosen Medium vereinzelt wird und dass die Flüssigkeit oder das niederviskose Medium mit dem darin befindlichen Kohlenstoffmaterial in einem Trocknungsprozess in die Form eines Granulats gebracht wird.

Dabei ist die vorliegende Erfindung nicht auf bestimmte Flüssigkeiten beschränkt. Einzelne, jedoch nicht ausschließliche Beispiele für Flüssigkeiten werden im weiteren Verlauf der Beschreibung beschrieben. Als Flüssigkeiten können alle Flüssigkeiten verwendet werden, mit denen eine Vereinzelung des Kohlenstoffmaterials möglich ist. Vorzugsweise kann zur Vereinzelung Ethanol, Wasser, aliphate Kohlenwasserstoffe, cyclische Kohlenwasserstoffe verwendet werden.

Als ein niederviskoses Medium wird ein Medium, vorzugsweise eine Flüssigkeit verstanden, welche durch eine niedrige Viskosität gekennzeichnet ist. Dabei ist die vorliegende Erfindung nicht auf bestimmte niederviskose Medien beschränkt. Vorzugsweise kann als niederviskoses Medium Ethanol, Wasser, aliphate Kohlenwasserstoffe, cyclische Kohlenwasserstoffe verwendet werden.

Als "vereinzeln" im Sinne der vorliegenden Erfindung wird als ein Synonym zum Begriff "dispergieren" verwenden, wenn die Primärpartikel nach dem Prozess nicht mehr agglomeriert, sondern als Einzelpartikel vorliegen.

Als Aufbau- oder Trocknungsprozess werden Prozesse verstanden, durch die beziehungsweise mittels derer ein Granulat der oben genannten Form hergestellt werden kann. Dabei kann es vorzugsweise erforderlich sein, dass die Herstellung einen Trocknungsschritt beinhaltet. Bei einem solchen Trocknungsschritt kann beispielsweise dem Granulat oder dem Vormaterial durch Aufbringung von Wärme Wasser oder Feuchte oder Feuchtigkeit entzogen werden. Ein Aufbauprozess im Sinne der vorliegenden Erfindung kann ein Prozess sein, bei dem der Aufbau des Granulats erfolgt. Die vorliegende Erfindung ist dabei nicht auf bestimmte Ausgestaltungen von Aufbau- oder Trocknungsprozessen beschränkt.

Beispielsweise kann dies geschehen, indem man die CNT, in niederviskosen Medien einmischt und der richtigen Kombination von Scherkräften, Zeit und Temperatur unterwirft.

Vorzugsweise kann vorgesehen sein, dass Kohlenstoffmaterial, beispielsweise Multiwall-Carbon Nanotubes in einer Flüssigkeit, beispielsweise in Ethanol, vorzugsweise mit Hilfe eines Additivs, beispielsweise mit Hilfe eines nicht-ionischen Tensids, mit einem bestimmten Molekulargewicht, beispielsweise größer als 2000 g/mol, vereinzelt werden. Die Konzentration der Dispersion beträgt vorteilhaft 5 wt.-%. Diese Dispersion wird mittels eines Trocknungsprozesses, beispielsweise eines Sprühtrocknungsprozesses zu einem Granulat getrocknet, vorteilhaft mit einer mittleren Partikelgröße von 200 µm.

Das dabei entstandene Granulat hat vorzugsweise einen Feuchtegehalt unter 30 %, bevorzugt unter 10 %, besonders bevorzugt unter 0,5 %. In diesen Fällen liegt die mittlere Partikelgröße über 20 µm, bevorzugt 50 µm, besonders bevorzugt über 100 µm, das Molekulargewicht über 100 g/mol, bevorzugt über 500 g/mol, besonders bevorzugt über 2000 g/mol, sowie der Feststoffgehalt in der Dispersion bei 0,1-10 wt.-%, bevorzugt bei 0,2-5 wt.-% und besonders bevorzugt bei 0,5-2 wt.-%. Dabei können entsprechend anionische, kationische, nicht-ionische oder elektrostatische Tenside verwendet werden.

Das Granulat kann vorteilhaft so hergestellt werden, dass es mit technisch üblichen Dosieranlagen gefördert werden kann. Idealerweise kann dies ohne ein Verklumpen des Materials und ohne Verstauben geschehen.

Das Granulat kann vorteilhaft so hergestellt werden, dass es in allen bekannten Lösemitteln, in denen stabile Kohlenstoffpartikel-Dispersionen möglich sind, aufgelöst werden kann.

Das Granulat lässt sich vorzugsweise auch in Schmelzen oder Monomermischungen/-lösungen einmischen und führt dabei zu einer homogen Verteilung der zuvor granulierten Primärpartikel.

Gemäß eines dritten Aspekts der vorliegenden Erfindung wird eine Dispersion bereitgestellt. Dabei weist diese Dispersion Kohlenstoffpartikelgranulat der oben beschriebenen Art auf, wobei das Kohlenstoffpartikelgranulat in einer Flüssigkeit oder in einem niederviskosen Medium aufgelöst ist.

Dabei ist die vorliegende Erfindung nicht auf bestimmte Flüssigkeiten beschränkt. Einzelne, jedoch nicht ausschließliche Beispiele für Flüssigkeiten werden im weiteren Verlauf der Beschreibung beschrieben. Als Flüssigkeiten können alle Flüssigkeiten verwendet werden, mit denen eine Vereinzelung des Kohlenstoffmaterials möglich ist. Vorzugsweise kann zur Vereinzelung Ethanol, Wasser, aliphate Kohlenwasserstoffe, cyclische Kohlenwasserstoffe verwendet werden.

Als ein niederviskoses Medium wird ein Medium, vorzugsweise eine Flüssigkeit verstanden, welche durch eine niedrige Viskosität gekennzeichnet ist. Dabei ist die vorliegende Erfindung nicht auf bestimmte niederviskose Medien beschränkt. Vorzugsweise kann als niederviskoses Medium Ethanol, Wasser, aliphate Kohlenwasserstoffe, cyclische Kohlenwasserstoffe verwendet werden.

Dabei kann vorgesehen sein, dass ein Kohlenstoffgranulat, beispielsweise ein Kohlenstoffnanopartikelgranulat, das vorteilhaft stabilisiert ist mit einem Polyelektrolyten, mit einer mittleren Partikelgröße von 300 µm mittels eines Rührers, beispielsweise eines Magnetrührers, vorzugsweise mit einer Konzentration von 3 wt.-% in Wasser aufgelöst wird.

Nach einer definierten Zeitspanne des Rührens, die beispielsweise 30 Minuten betragen kann, sind vorzugsweise keine Agglomerate größer als 5 µm mehr zu beobachten.

Vorzugsweise wird ein Kohlenstoffpartikelgranulat, insbesondere ein Kohlenstoffnanopartikelgranulat und/oder ein Kohlenstoffmikropartikelgranulat, welches leicht dosierbar und/oder leicht dispergierbar, insbesondere redispergierbar, ausgebildet ist, bereitgestellt, das erhältlich ist, indem ein Kohlenstoffmaterial in einer Flüssigkeit oder in einem niederviskosen Medium vereinzelt wird und indem die Flüssigkeit oder das niederviskose Medium mit dem darin befindlichen Kohlenstoffmaterial in einem Aufbau- und/oder Trocknungsprozess in die Form eines Granulats gebracht wird. Darüber hinaus kann das Kohlenstoffpartikelgranulat zudem leichtlöslich sein.

Das erfindungsgemäße Granulat kann insbesondere genutzt werden, um die elektrischen, thermischen, rheologischen und mechanischen Eigenschaften von Matrixmaterialien und Lösemitteln zu verändern. Dabei ist die eingesetzte Menge des Kohlenstoffpartikelgranulats nicht abhängig von dem Gehalt an Feuchtigkeit, die im Granulat vorhanden ist, sondern ausschließlich von der maximal möglichen Konzentration von Kohlenstoffpartikeln in der gewählten Matrix.

Dabei kann die Dispersion in weiterer Ausgestaltung einen Feststoffgehalt von 0,1 bis 10 wt.-% aufweisen. Bevorzugt weist die Dispersion einen Feststoffgehalt von 0,2 bis 5 wt.-%, besonders bevorzugt von 0,5 bis 2 wt.-% auf.

Als Feststoffhalt im Sinne der Erfindung kann insbesondere verstanden werden, dass der Anteil an festen Stoffen in der Dispersion einen definierten Wert aufweist. Dabei kann der Wert in den oben genannten Bereichen liegen, wobei die vorliegende Erfindung nicht auf diese Wertebereiche beschränkt ist.

Gemäß eines vierten Aspekts der vorliegenden Erfindung wird ein Verfahren zur Herstellung einer Dispersion beschrieben. Dabei handelt es sich insbesondere um einer Dispersion nach einer wie oben beschriebenen Art, wobei die Dispersion aus Kohlenstoffpartikelgranulat nach der oben beschriebenen Art bestehen kann und in einer Flüssigkeit oder in einem niederviskosen Medium aufgelöst wird.

Dabei kann vorgesehen sein, dass ein Kohlenstoffgranulat, beispielsweise ein Kohlenstoffnanopartikelgranulat, das vorteilhaft stabilisiert ist mit einem Polyelektrolyten, mit einer mittleren Partikelgröße von 300 µm mittels eines Rührers, beispielsweise eines Magnetrührers, vorzugsweise mit einer Konzentration von 3 wt.-% in Wasser aufgelöst wird.

Nach einer definierten Zeitspanne des Rührens, die beispielsweise 30 Minuten betragen kann, sind vorzugsweise keine Agglomerate größer als 5 µm mehr zu beobachten.

Vorzugsweise wird ein Kohlenstoffpartikelgranulat, insbesondere ein Kohlenstoffnanopartikelgranulat und/oder ein Kohlenstoffmikropartikelgranulat, welches leicht dosierbar und/oder leicht dispergierbar, insbesondere redispergierbar, ausgebildet ist, bereitgestellt, das erhältlich ist, indem ein Kohlenstoffmaterial in einer Flüssigkeit oder in einem niederviskosen Medium vereinzelt wird und indem die Flüssigkeit oder das niederviskose Medium mit dem darin befindlichen Kohlenstoffmaterial in einem Aufbau- und/oder Trocknungsprozess in die Form eines Granulats gebracht wird. Darüber hinaus kann das Kohlenstoffpartikelgranulat zudem leichtlöslich sein.

Das erfindungsgemäße Granulat kann insbesondere genutzt werden, um die elektrischen, thermischen, rheologischen und mechanischen Eigenschaften von Matrixmaterialien und Lösemitteln zu verändern. Dabei ist die eingesetzte Menge des Kohlenstoffpartikelgranulats nicht abhängig von dem Gehalt an Feuchtigkeit, die im Granulat vorhanden ist, sondern ausschließlich von der maximal möglichen Konzentration von Kohlenstoffpartikeln in der gewählten Matrix.

Nachfolgend wird die Erfindung anhand einiger Beispiele näher erläutert.

### Beispiel 1:

Multiwall-Carbonnanotubes werden in Ethanol mit Hilfe eines geeigneten nicht-ionischen Tensids mit einem Molekulargewicht größer als 2000 g/mol vereinzelt. Die Konzentration der Dispersion beträgt 5 wt.-%. Diese Dispersion wird mittels eines Sprühtrocknungsprozesses zu einem Granulat mit einer mittleren Partikelgröße von 200 µm versprüht. Das dabei entstandene Granulat hat einen Feuchtegehalt von 0,5 %.

### Beispiel 2 (nicht gemäß Erfindung)

Ein Kohlenstoffnanopartikelgranulat, stabilisiert mit einem Polyelektrolyten, mit einer mittleren Partikelgröße von 300 µm wird mittels eines Magnetrührers mit einer Konzentration von 3 wt.-% in Wasser aufgelöst. Nach 30 Minuten Rühren sind keine Agglomerate grösser als 5 µm mehr zu beobachten.

Die vorliegende Erfindung zeichnet sich insbesondere auch durch die nachfolgenden Merkmale aus:
Ein Granulat bestehend aus Kohlenstoffpartikeln, insbesondere aus Kohlenstoffnanopartikeln; die vereinzelbare CNT aufweisenund/oder
Ein Granulat, welches sich mit einfachen Mitteln zu überwiegend vereinzelten Kohlenstoffpartikeln auflösen lässt; und/oder
Ein Granulat, welches ein, insbesondere organisches, Material als Additiv enthalten kann; und/oder
Ein Granulat, in dem das, insbesondere organische, Additiv zugleich als Binder und als Dispergierhilfsmittel wirkt; und/oder
Ein Granulat, das in unterschiedlichsten Lösemitteln. Lösungen, Schmelzen und Monomeren auflösbar ist; und/oder
Ein Granulat, das mit einer frei wählbaren mittleren Partikelgröße herstellbar ist;. und/oder
Ein Granulat mit einer geringen Verstaubungsneigung.

Die vorliegende Erfindung umfasst ein Kohlenstoffpartikelgranulat, insbesondere ein Kohlenstoffnanopartikelgranulat und/oder ein Kohlenstoffmikropartikelgranulat, wobei das Kohlenstoffpartikelgranulat eine Anzahl von Granulatpartikeln aufweist. Das Kohlenstoffpartikelgranulat ist dabei gekennzeichnet dadurch, dass die Granulatpartikel jeweils aus einem Primärpartikel auf Kohlenstoffbasis und wenigstens aus einem Additiv gebildet sind. Des Weiteren umfasst die vorliegende Erfindung ein Verfahren zur Herstellung dieses Kohlenstoffpartikelgranulat, sowie eine Dispersion, die dieses Kohlenstoffpartikelgranulat enthält und in einer Flüssigkeit aufgelöst ist und ein Verfahren zur Herstellung dieser Dispersion.

## Patentansprüche

1. Kohlenstoffpartikelgranulat, insbesondere Kohlenstoffnanopartikelgranulat und/oder Kohlenstoffmikropartikelgranulat, aufweisend eine Anzahl von Granulatpartikeln, **dadurch gekennzeichnet, dass** ein Granulatpartikel jeweils aus einem Primärpartikel auf Kohlenstoffbasis, welches vereinzelbare Carbon Nanotubes (CNT) aufweist, und wenigstens aus einem Tensid gebildet ist.

2. Kohlenstoffpartikelgranulat nach Anspruch 1, **dadurch gekennzeichnet, dass** dieses einen Kohlenstoffgehalt von größer gleich 30 Gew.-%, bevorzugt von größer gleich 50 Gew.-%, besonders bevorzugt von größer gleich 70 Gew.-% aufweist.

3. Kohlenstoffpartikelgranulat nach Anspruch 1 oder 2, **dadurch gekennzeichnet, dass** dieses einen Feuchtegehalt von unter 30%, bevorzugt von unter 10% Feuchte, besonders bevorzugt von unter 1% Feuchte aufweist.

4. Kohlenstoffpartikelgranulat nach einem der Ansprüche 1 bis 3, **dadurch gekennzeichnet, dass** die Granulatpartikel eine mittlere Partikelgröße von größer gleich 20 µm, bevorzugt von größer gleich 50 µm, besonders bevorzugt von größer gleich 100 µm aufweisen.

5. Verfahren zur Herstellung eines Kohlenstoffpartikelgranulats, insbesondere eines Kohlenstoffpartikelgranulats nach einem der Ansprüche 1 bis 4, **dadurch gekennzeichnet, dass** Primärpartikel auf Kohlenstoffbasis, welche vereinzelbare CNT aufweisen, und wenigstens ein Tensid in einer Flüssigkeit oder in einem niederviskosen Medium zu einer Dispersion vereinzelt werden und dass die Dispersion in einem Aufbau- und/oder Trocknungsprozess in die Form eines Kohlenstoffpartikelgranulats gebracht wird.

6. Dispersion, aufweisend Kohlenstoffpartikelgranulat nach einem der Ansprüche 1 bis 4, wobei das Kohlenstoffpartikelgranulat in einer Flüssigkeit oder in einem niederviskosen Medium aufgelöst ist.

7. Dispersion nach Anspruch 6, **dadurch gekennzeichnet, dass** diese einen Feststoffgehalt von 0,1 bis 10 Gew.-%, bevorzugt 0,2 bis 5 Gew.-%, besonders bevorzugt von 0,5 bis 2 Gew.-% aufweist.

8. Verfahren zur Herstellung einer Dispersion, insbesondere einer Dispersion nach einem der Ansprüche 6 oder 7, **dadurch gekennzeichnet, dass** ein Kohlenstoffpartikelgranulat nach einem der Ansprüche 1 bis 4, in einer Flüssigkeit oder in einem niederviskosen Medium aufgelöst wird.

## Claims

1. Carbon particle granulate, in particular carbon nanoparticle granulate and/or carbon microparticle granulate, comprising a number of granulate particles, **characterised in that** each granulate particle is formed from a primary carbon-based particle, which comprises separable carbon nanotubes (CNT), and at least one surfactant.

2. Carbon particle granulate according to claim 1, **characterized in that** it has a carbon content of greater than or equal to 30% by weight, preferably of greater than or equal to 50% by weight, particularly preferred of greater than or equal to 70% by weight.

3. Carbon particle granulate according to claim 1 or 2, **characterized in that** it has a moisture content of less than 30%, preferably of less than 10% moisture, particularly preferred of less than 1% moisture.

4. Carbon particle granulate according to one of claims 1 to 3, **characterized in that** the granulate particles have a mean particle size of greater than or equal to 20 µm, preferably of greater than or equal to 50 µm, particularly preferred of greater than or equal to 100 µm.

5. Method for the production of a carbon particle granulate, in particular a carbon particle granulate according to one of claims 1 to 4, **characterized in that** primary carbon-based particles, which have separable CNTs, and at least one surfactant are separated in a liquid or in a low-viscosity medium to form a dispersion, and **in that** the dispersion is brought into the form of a carbon particle granulate in a build-up and/or drying process.

6. Dispersion comprising a carbon particle granulate according to any one of claims 1 to 4, wherein the carbon particle granulate is dissolved in a liquid or in a low-viscosity medium.

7. Dispersion according to claim 6, **characterized in that** it has a solid content of 0.1 to 10% by weight, preferably 0.2 to 5% by weight, particularly preferred of 0.5 to 2% by weight.

8. Method for the production of a dispersion, in particular a dispersion according to one of claims 6 or 7, **characterized in that** a carbon particle granulate according to one of claims 1 to 4 is dissolved in a liquid or in a low-viscosity medium.

## Revendications

1. Granulé de particules de carbone, en particulier granulé de nanoparticules de carbone et/ou granulé de microparticules de carbone, présentant un certain nombre de particules de granulé, **caractérisé en ce que** chaque particule de granulé est formée d'une particule primaire à base de carbone, qui présente des nanotubes de carbone (CNT) individualisables, et au moins d'un tensioactif.

2. Granulé de particules de carbone selon la revendication 1, **caractérisé en ce qu'**il présente une teneur en carbone supérieure ou égale à 30 % en poids, de préférence supérieure ou égale à 50 % en poids, d'une manière particulièrement préférée supérieure ou égale à 70 % en poids.

3. Granulé de particules de carbone selon la revendication 1 ou 2, **caractérisé en ce qu'**il présente une teneur en humidité inférieure à 30 %, de préférence inférieure à 10 % d'humidité, d'une manière particulièrement préférée inférieure à 1 % d'humidité.

4. Granulé de particules de carbone selon l'une des revendications 1 à 3, **caractérisé en ce que** les particules du granulé présentent une granulométrie moyenne supérieure ou égale à 20 µm, de préférence supérieure ou égale à 50 µm, d'une manière particulièrement préférée supérieure ou égale à 100 µm.

5. Procédé de fabrication d'un granulé de particules de carbone, en particulier d'un granulé de particules de carbone selon l'une des revendications 1 à 4, **caractérisé en ce qu'**on individualise dans un liquide ou dans un milieu à faible viscosité, pour obtenir une dispersion, des particules primaires à base de carbone, qui présentent des CNT individualisables, et au moins un tensioactif, et **en ce qu'**on met la dispersion, dans un processus de synthèse et/ou de séchage, sous la forme d'un granulé de particules de carbone.

6. Dispersion présentant un granulé de particules de carbone selon l'une des revendications 1 à 4, le granulé de particules de carbone étant dissous dans un liquide ou dans un milieu à faible viscosité.

7. Dispersion selon la revendication 6, **caractérisée en ce qu'**elle présente une teneur en extrait sec de 0,1 à 10 % en poids, de préférence de 0,2 à 5 % en poids, d'une manière particulièrement préférée de 0,5 à 2 % en poids.

8. Procédé de fabrication d'une dispersion, en particulier d'une dispersion selon l'une des revendications 6 ou 7, **caractérisé en ce qu'**on dissout un granulé de particules de carbone selon l'une des revendications 1 à 4 dans un liquide ou dans un milieu à faible viscosité.
